# EUROPÄISCHE PATENTSCHRIFT

(11) **EP 1 714 187 B1**
(45) Veröffentlichungstag und Bekanntmachung des Hinweises auf die Patenterteilung: **06.06.2012**
(21) Anmeldenummer: 04766714.2
(22) Anmeldetag: 06.09.2004
(51) Int. Cl.: G02F 1/365, G02B 21/00

(54) **MIKROSKOP MIT EINER LICHTQUELLE MIT MEHREREN MIKROSTRUKTURIERTEN OPTISCHEN ELEMENTEN**
MICROSCOPE HAVING A LIGHT SOURCE COMPRISING A PLURALITY OF MICROSTRUCTURED OPTICAL ELEMENTS
MICROSCOPE COMPRENANT UNE SOURCE DE LUMIERE COMPRENANT PLUSIEURS ELEMENTS OPTIQUES MICROSTRUCTURES

(30) Priorität: 05.09.2003 DE 10340964
(43) Veröffentlichungstag der Anmeldung: 25.10.2006
(73) Patentinhaber: Leica Microsystems CMS GmbH, 35578 Wetzlar (DE)
(72) Erfinder: GUGEL, Hilmar, 69221 Dossenheim (DE)
(74) Vertreter: Schaumburg, Thoenes, Thurn, Landskron, Eckert
(86) Internationale Anmeldenummer: PCT/EP2004/052053
(87) Internationale Veröffentlichungsnummer: WO 2005/024482

(56) Entgegenhaltungen:
- EP-A- 0 886 174
- EP-A- 0 922 992
- EP-A- 1 184 701
- DE-A- 4 416 558
- DE-A- 10 115 488
- US-A- 5 960 146
- US-A- 6 097 870
- US-A1- 2003 081 915
- BIRKS T A ET AL: "SUPERCONTINUUM GENERATION IN TAPERED FIBERS" OPTICS LETTERS, OPTICAL SOCIETY OF AMERICA, WASHINGTON, US, Bd. 25, Nr. 19, 1. Oktober 2000 (2000-10-01), Seiten 1415-1417, XP000981159 ISSN: 0146-9592 in der Anmeldung erwähnt
- PATENT ABSTRACTS OF JAPAN Bd. 2002, Nr. 09, 4. September 2002 (2002-09-04) & JP 2002 148468 A (MITSUBISHI CABLE IND LTD; NIPPON TELEGR & TELEPH CORP <NTT>), 22. Mai 2002 (2002-05-22)
- RANKA J K ET AL: "VISIBLE CONTINUUM GENERATION IN AIR-SILICA MICROSTRUCTURE OPTICAL FIBERS WITH ANOMALOUS DISPERSION AT 800 NM" OPTICS LETTERS, OPTICAL SOCIETY OF AMERICA, WASHINGTON, US, Bd. 25, Nr. 1, 1. Januar 2000 (2000-01-01), Seiten 25-27, XP000928530 ISSN: 0146-9592 in der Anmeldung erwähnt

## Beschreibung

Die Erfindung betrifft eine Lichtquelle mit einem mikrostrukturierten optischen Element, das das Licht einer Primärlichtquelle empfängt und spektral verbreitert.

Die Patentschrift US 6,097,870 offenbart eine Anordnung zur Generierung eines Breitbandspektrums im sichtbaren und infraroten Spektralbereich. Die Anordnung basiert auf einer mikrostrukturierten Faser, in die das Licht eines Pumplasers eingekoppelt wird. Das Pumplicht wird in der mikrostrukturierten Faser durch nichtlineare Effekte verbreitert. Als mikrostrukturierte Faser findet auch sog. Photonic-Band-Gap-Material oder "photon crystal fibres", "holey fibers" oder "microstructured fibers" Verwendung. Es sind auch Ausgestaltungen als sog. "Hollow fiber" bekannt.

Eine weitere Anordnung zur Generierung eines Breitbandspektrums ist in der Veröffentlichung von Birks et al.: "Supercontinuum generation in tapered fibers", Opt.Lett. Vol. 25, p.1415 (2000), offenbart. In der Anordnung wird eine herkömmliche Lichtleitfaser mit einem Faserkern, die zumindest entlang eines Teilstücks eine Verjüngung aufweist verwendet. Lichtleitfasern dieser Art sind als sog. "tapered fibers" bekannt.

Insbesondere in der Mikroskopie, der Endoskopie, der Flußzytometrie, der Chromatographie und in der Lithographie sind zur Beleuchtung der Objekte universelle Beleuchtungseinrichtungen mit hoher Leuchtdichte wichtig. In der Scanmikroskopie wird eine Probe mit einem Lichtstrahl abgerastert. Hierzu werden oft Laser als Lichtquelle eingesetzt. Aus der EP 0 495 930: "Konfokales Mikroskopsystem für Mehrfarbenfluoreszenz" ist beispielsweise ein Anordnung mit einem einzelnen mehrere Laserlinien emittierenden Laser bekannt. Derzeit werden hierfür meist Mischgaslaser, insbesondere ArKr-Laser, eingesetzt. Als Probe werden beispielsweise mit Fluoreszenzfarbstoffen präparierte, biologische Gewebe oder Schnitte untersucht. Im Bereich der Materialuntersuchung wird oft das von der Probe reflektierte Beleuchtungslicht detektiert. Auch Festkörperlaser und Farbstofflaser, sowie Faserlaser und Optisch-Parametrische-Oszillatoren (OPO), denen ein Pumplaser vorgeordnet ist, werden häufig verwendet.

Aus der Offenlegungsschrift DE 101 15 488 A1 ist eine Vorrichtung zur Beleuchtung eines Objekts, die ein mikrostrukturiertes optisches Element beinhaltet, das das Licht eines Lasers spektral verbreitert, bekannt. Die Vorrichtung umfasst eine Optik, die das spektral verbreiterte Licht zu einem Beleuchtungslichtstrahl formt. Außerdem ist in der Offenlegungsschrift die Verwendung der Vorrichtung zur Beleuchtung in einem Mikroskop, insbesondere in einem Scanmikroskop, offenbart.

Aus der Patentanmeldung DE 101 15 509 A1 ist eine Anordnung zum Untersuchen mikroskopischer Präparate mit einem Scanmikroskop und einer Beleuchtungseinrichtung für ein Scanmikroskop bekannt. Die Anordnung besteht aus einem Laser und einem optischen Mittel, dass das von dem Laser erzeugte Licht auf eine zu untersuchende Probe abbildet. Zwischen dem Laser und dem optischen Mittel ist ein optisches Bauelement vorgesehen, dass das vom Laser erzeugte Licht bei einmaligem Durchlauf spektral verbreitert, wobei das optische Bauelement aus Photonic-Band-Gap-Material besteht und vorzugsweise als Lichtleitfaser ausgebildet ist.

In dem Artikel von Ranka et al., Optics Letters, Vol. 25, No. 1, ist die Erzeugung von Licht eines Breitbandwellenlängenspektrums von 500 bis 1600 nm mit Hilfe einer Luft-Quarzglas-Faser gezeigt.

Die Eigenschaften des mit Hilfe von mikrostrukturierten optischen Elementen, wie beispielsweise photonischen Kristallfasern, erzeugten Lichts, hängen neben der Wellenlänge der Primärlichtquelle auch von den Parametern des mikrostrukturierten optischen Elements, wie beispielsweise der Null-Dispersions-Wellenlänge oder der Art und der Dimensionen der Loch- bzw. der Mikrostruktur, ab. In der Regel weisen zwei unterschiedliche photonische Kristallfasern bei gleicher Wellenlänge des Primärlichtes ein unterschiedliches Emissionsspektrum auf. Dies ist insbesondere mit Hinblick auf die Reproduzierbarkeit von Experimenten von besonderem Nachteil.

Die Leistung des spektral verbreiteten Lichts verteilt sich in der Regel weitgehend gleichmäßig über den gesamten breiten Spektralbereich, so dass für Anwendungen, bei denen nur Licht einzelner Wellenlängen oder Licht einzelner kleiner Wellenlängenbereiche benötigt wird, nur eine relativ geringe Lichtleistung (typischerweise stehen 1-5 mW/nm) zur Verfügung steht.

Die Offenlegungsschrift DE 100 56 382 A1 offenbart eine Lichtquelle zur Beleuchtung in der Scanmikroskopie und ein Scanmikroskop. Die Lichtquelle beinhaltet eine elektromagnetische Energiequelle, die Licht einer Wellenlänge emittiert und ein Mittel zum räumlichen Aufteilen des Lichts in mindestens zwei Teillichtstrahlen. In mindestens' einem Teillichtstrahl ist ein Zwischenelement zur Wellenlängenänderung vorgesehen. Die Lichtquelle ist in der STED-Mikroskopie einsetzbar.

In der Rastermikroskopie wird eine Probe mit einem Lichtstrahl beleuchtet, um das von der Probe emittierte Reflexions- oder Fluoreszenzlicht zu beobachten. Der Fokus eines Beleuchtungslichtstrahles wird mit Hilfe einer steuerbaren Strahlablenkeinrichtung, im Allgemeinen durch Verkippen zweier Spiegel, in einer Objektebene bewegt, wobei die Ablenkachsen meist senkrecht aufeinander stehen, so dass ein Spiegel in x-, der andere in y-Richtung ablenkt. Die Verkippung der Spiegel wird beispielsweise mit Hilfe von Galvanometer-Stellelementen bewerkstelligt. Die Leistung des vom Objekt über einen Detektionsstrahlengang kommenden Lichtes wird mit einem Detektor in Abhängigkeit von der Position des Abtaststrahles gemessen. Üblicherweise werden die Stellelemente mit Sensoren zur Ermittlung der aktuellen Spiegelstellung ausgerüstet.

Speziell in der konfokalen Rastermikroskopie wird ein Objekt mit dem Fokus eines Lichtstrahles in drei Dimensionen abgetastet.

Ein konfokales Rastermikroskop umfasst im Allgemeinen eine Lichtquelle, eine Abbildungsoptik, mit der das Licht der Quelle auf eine Lochblende - die sog. Anregungsblende - fokussiert wird, einen Strahlteiler, eine Strahlablenkeinrichtung zur Strahlsteuerung, eine Mikroskopoptik, eine Detektionsblende und die Detektoren zum Nachweis des Detektions- bzw. Fluoreszenzlichtes. Das Beleuchtungslicht wird oft über den Strahlteiler, der beispielsweise als Neutralstrahlteiler oder als dichroitischer Strahlteiler ausgeführt sein kann, eingekoppelt. Neutralstrahlteiler haben den Nachteil, dass je nach Teilungsverhältnis viel Anregungs- oder viel Detektionslicht verloren geht.

Das vom Objekt kommende Detektionslicht (z.B. Fluoreszenz- oder Reflexionslicht) gelangt über die Strahlablenkeinrichtung zurück zum Strahlteiler, passiert diesen, um anschließend auf die Detektionsblende fokussiert zu werden, hinter der sich die Detektoren befinden. Detektionslicht, das nicht direkt aus der Fokusregion stammt, nimmt einen anderen Lichtweg und passiert die Detektionsblende nicht, so dass man eine Punktinformation erhält, die durch sequentielles Abtasten des Objekts zu einem dreidimensionalen Bild führt. Meist wird ein dreidimensionales Bild durch schichtweise Bilddatenaufnahme erzielt, wobei die Bahn des Abtastlichtstrahles auf bzw. in dem Objekt idealerweise einen Mäander beschreibt. (Abtasten einer Zeile in x-Richtung bei konstanter y-Position, anschließend x-Abtastung anhalten und per y-Verstellung auf die nächste abzutastende Zeile schwenken und dann, bei konstanter y-Position, diese Zeile in negative x-Richtung abtasten u.s.w.). Um eine schichtweise Bilddatenaufnahme zu ermöglichen, wird der Probentisch oder das Objektiv nach dem Abtasten einer Schicht verschoben und so die nächste abzutastende Schicht in die Fokusebene des Objektivs gebracht.

Bei vielen Anwendungen werden Proben mit mehreren Markern, beispielsweise mehreren unterschiedlichen Fluoreszenzfarbstoffen präpariert. Diese Farbstoffe können sequentiell, beispielsweise mit Beleuchtungslichtstrahlen, die unterschiedliche Anregungswellenlängen aufweisen, angeregt werden.

Eine Auflösungssteigerung in Richtung der optischen Achse lässt sich, wie in der Europäischen Patentschrift EP 0 491 289 mit dem Titel: "Doppelkonfokales Rastermikroskop" beschrieben ist, durch eine Doppelobjektivanordnung (4Pi-Anordnung) erreichen. Das vom Beleuchtungssystem kommende Licht wird in zwei Teilstrahlen aufgespalten, die die Probe einander entgegenlaufend durch zwei spiegelsymmetrisch angeordnete Objektive gleichzeitig beleuchten. Die beiden Objektive sind auf verschiedenen Seiten der ihnen gemeinsamen Objektebene angeordnet. Im Objektpunkt bildet sich durch diese interferometrische Beleuchtung ein Interferenzmuster aus, dass bei konstruktiver Interferenz ein Hauptmaximum und mehrere Nebenmaxima aufweist. Mit einem doppelkonfokalen Rastermikroskop kann im Vergleich zum konventionellen Rastermikroskop durch die interferometrische Beleuchtung eine erhöhte axiale Auflösung erzielt werden.

Eine Anordnung zur Steigerung des Auflösungsvermögens für Fluoreszenzanwendungen ist aus der DE 44 16 558 bekannt. Hierbei werden die lateralen Randbereiche des Fokusvolumens des Anregungslichtstrahls mit einem Lichtstrahl einer anderen Wellenlänge, dem sog. Stimulationslichtstrahl, der von einem zweiten Laser emittiert wird, beleuchtet, um dort die vom Licht des ersten Lasers angeregten Probenbereiche stimuliert in den Grundzustand zurück zu bringen. Detektiert wird dann nur das spontan emittierte Licht aus den nicht vom zweiten Laser beleuchteten Bereichen, so dass insgesamt eine Auflösungsverbesserung erreicht wird. Für dieses Verfahren hat sich die Bezeichnung STED (Stimulated Emission Depletion) eingebürgert.

Eine neue Entwicklung hat gezeigt, dass man gleichzeitig sowohl lateral, als auch axial eine Auflösungsverbesserung erzielen kann, wenn es gelingt, den Fokus des Stimulationslichtstrahles innen hohl zu machen. Hierzu wird in den Strahlengang des Stimulationslichtstrahles eine runde Phasenverzögerungsplatte eingebracht, welche die Lichtwellen in Teilbereichen um eine Phase verzögert, die einer optischen Weglänge von λ/2 entspricht. Die Phasenverzögerungsplatte ist in ihrem Durchmesser kleiner als der Strahldurchmesser und wird folglich überleuchtet. Um einen innen hohlen Stimulationsstrahl zu erreichen, muss die Lichtmenge, die eine Phasenverzögerung von λ/2 erfährt, gleich der nicht verzögerten Lichtmenge sein.

STED-Mikroskopie wird zur Zeit in drei verschiedenen Konfigurationen durchgeführt:

Mittels eines Titan-Saphir-Lasers (TiSa) zum stimulierten Abregen des Fluoreszenzfarbstoffs und eines durch den TiSa gepumpten optischen parametrischen Oszillators (OPO) zum Anregen des Fluoreszenzfarbstoffs. (Proc. Natl. Acad. Sci. U.S.A., Vol. 97, p. 8206-8210, 2000)

Mittels zweier synchronisierter Laserdioden, von denen eine Laserdiode eine Wellenlänge im Wellenlängenbereich des Absorptionsspektrums des Farbstoffs und die andere Laserdiode eine Wellenlänge im Bereich des Emissionsspektrums des Farbstoffs besitzt. (Appl. Phys. Lett., Vol. 82, No. 18, p. 3125-3127, 2003)

Mittels eines gepulsten Festkörperlasers, dessen Licht einerseits zur stimulierten Abregung des Fluoreszenzfarbstoffs verwendet wird. Anderseits wird das Licht frequenzverdoppelt und zur Anregung des Farbstoffs verwendet. (Hell, S. W. (1997). "Increasing the Resolution of Far-Field Fluorescence Microscopy by Point-Spread-Function Engineering." Topics In Fluorescence Spectroscopy 5: Nonlinear and Two-Photon-Induced Fluorescence. J. Lakowicz. New York, Plenum Press. 5.)

In der STED-Mikroskopie werden beispielsweise Titan-Saphir-Laser in Verbindung mit optisch parametrischen Oszillatoren (OPO) als Lichtquelle verwendet. Lichtquellen dieser Art haben den Nachteil, dass sie nur Licht eines sehr begrenzten Wellenlängenspektrums zur Verfügung stellen können und dass sie darüber hinaus schwierig bedienbar sind. Nachteilhaft ist bei diesen Lichtquellen nicht zuletzt der sehr hohe Anschaffungspreis. Derzeit werden auch aufeinander synchronisierte Halbleiterlaser als Lichtquellen in der STED-Mikroskopie verwendet, wobei nachteiligerweise die Lichtleistung der zum stimulierten Abregen verwendeten Laserdiode oft nicht ausreicht. Außerdem ist man zwingend auf die beiden Wellenlängen der eingesetzten Laserdioden festgelegt. Als Alternative werden derzeit in der STED-Mikroskopie auch Festkörperlaser mit nachfolgender Frequenzverdopplung verwendet. Hierbei ist man für das Licht zur Anregung der Probe und für das Licht, das eine stimulierte Emission bewirkt, auf zwei voneinander abhängige Wellenlängen zwingend festgelegt, was die Einsetzbarkeit dieses Lichtquellentyps auf wenige Anwendungsmöglichkeiten einschränkt.

In der EP-A-0 922 992 wird ein optischer Pulskompressor für optische Kommunikationssysteme beschrieben, bei dem Licht einer Pulsquelle durch eine erste optische Faser und dann durch eine zweite optische Faser hindurchgeleitet wird. Die erste optische Faser besitzt nicht-lineare optische Eigenschaften, während die zweite optische Faser lineare optische Eigenschaften besitzt. Der von der Pulsquelle ausgesendete Impuls wird aufgrund hoher positiver Dispersion in der ersten Faser verbreitert und hat einen größeren spektralen Gehalt. Dieser spektral verbreiterte Impuls durchläuft die zweite Faser mit negativer Dispersion und erfährt dort eine Chirp-Kompensation, um so einen wesentlich kürzeren Impuls zu erzeugen.

Aus der US 5,960,146 ist eine Pulslichtquelle bekannt, bei der durch Hintereinanderschalten von Lichtleitfasern die aufgrund von Dispersion bedingte Änderung der Impulsform zu kompensieren. Auch hier werden Lichtleitfasern mit einer positiven und einer negativen Dispersion zusammengeschaltet, um der spektralen Verbreiterung des Lichtimpulses entgegenzuwirken.

Es ist die Aufgabe der vorliegenden Erfindung, eine Lichtquelle mit einem mikrostrukturiertem optischen Element anzugeben, deren Emissionsspektrum auf die jeweilige Anwendung angepasst ist und die insbesondere in der Rastermikroskopie und speziell in der STED-Mikroskopie verwendbar ist.

Die Aufgabe wird durch eine Lichtquelle gelöst, die dadurch gekennzeichnet ist, dass das spektral verbreiterte Licht zumindest ein weiteres mikrostrukturiertes optisches Element durchläuft.

Durch die Hintereinander-Anordnung von zwei oder mehr mikrostrukturierten optischen Elementen können die spektralen Eigenschaften des von der Lichtquelle emittierten Lichts beeinflusst und an die Anforderungen der beabsichtigten Anwendung angepasst werden. Insbesondere kann durch geeignete Auswahl der Parameter des mikrostrukturierten optischen Elements und des weiteren mikrostrukturierten optischen Elements die Leistung des von der Lichtquelle emittierten Lichts in den spektralen Unterbereichen, die für eine Anwendung von besonderer Bedeutung sind, erhöht werden. Beispielsweise kann bei Verwendung der Lichtquelle in der STED-Mikroskopie eine Maximierung der Lichtleistung im Bereich des Absorptionsspektrums der verwendeten Probenfarbstoffe und im Bereich des Emissionsspektrums der verwendeten Probenfarbstotfe erzielt werden. Die erfindungsgemäße Lichtquelle eignet sich daher hervorragend für Anwendungen in der hochauflösenden Mikroskopie, wie beispielsweise der erwähnten STED-Mikroskopie oder in der STED-4Pi-Rastermikroskopie (doppelkonfokales Rastermikroskop), sowie in der CARS-Mikroskopie.

Gemäß der Erfindung wird mit der erfindungsgemäßen Lichtquelle Emissionslicht erzeugt, dessen spektrale Breite über die spektrale Breite, die jedes einzelne mikrostrukturierte optische Element erzeugen würde, hinausgeht. Eine solche Lichtquelle ist insbesondere für Mehrwellenlängen-STED-Anwendungen interessant, da hier ein sehr breites Superkontinuum benötigt wird.

In einer ganz besonders bevorzugten Ausgestaltungsvariante der Lichtquelle sind das mikrostrukturierte optische Element und das weitere mikrostrukturierte optische Element miteinander verspleißt. Das Verspleißen von Lichtleitfasern ist eine dem Fachmann hinlänglich bekannte Technik. In der Offenlegungsschrift US 2003/0081915 wird zudem beschrieben, wie eine konventionelle Faser mit einer mikrostrukturierten Faser so miteinander verspleißt werden, dass die Transmissionsverluste minimiert sind.

In einer anderen bevorzugten Ausgestaltungsvariante der Lichtquelle wird das Licht, welches aus dem mikrostrukturiertem optischen Element austritt, durch eine Linsenanordnung in das weitere mikrostrukturierte optische Element eingekoppelt.

Auch "Pump-Probe"-Experimente sind mit Hilfe der erfindungsgemäßen Lichtquelle effizient durchführbar.

Die Primärlichtquelle ist vorzugsweise eine Pulslichtquelle und umfasst in einer bevorzugten Variante einen Pulslaser, der beispielsweise als gepulster Titan-Saphir-Laser ausgeführt sein kann.

In einer besonders bevorzugten Ausgestaltungsform ist ein Mittel zum Selektieren von Lichtanteilen zumindest einer Wellenlänge und/oder zumindest eines Wellenlängenbereichs vorgesehen. Bei diesen Mitteln kann es sich beispielsweise um Farbfilter oder dichroitische Filter handeln. Vorzugsweise beinhaltet das Mittel zum Selektieren ein akusto-optisches oder elektro-optisches Bauteil. In einer bevorzugten Variante ist das Mittel zum Selektieren als AOTF (Acousto Optical Tunable Filter) oder als AOBS (Acousto Optical Beam Splitter) ausgeführt.

Wie bereits erwähnt, ist die Lichtquelle auch innerhalb eines Verfahrens zur Erzeugung von Beleuchtungslicht für die STED-Mikroskopie oder für "Pump-Probe"-Experimente hervorragend geeignet. Aus dem von der Lichtquelle emittierten spektral verbreiteten Licht wird hierbei mit Hilfe des Mittels zum Selektieren ein Lichtanteil, der eine Wellenlänge innerhalb des Anregungsspektrums des jeweils verwendeten Fluoreszenzfarbstoffs aufweist, abgespalten und ein weiterer Lichtanteil, der eine Wellenlänge innerhalb des Emissionsspektrums des verwendeten Fluoreszenzfarbstoffs aufweist, abgespalten und zu einem Beleuchtungslichtstrahl geformt. Während der Lichtanteil, der eine Wellenlänge innerhalb des Anregungsspektrums des Fluoreszenzfarbstoffs aufweist, zur Anregung der Probe im beleuchteten Bereicht dient, dient der Lichtanteil, der eine Wellenlänge innerhalb des Emissionsspektrums aufweist, zur Auslösung von stimulierter Emission in einem mit dem Anregungsprobenbereich teilweise überlappenden Probenbereich. Wenn die Primärlichtquelle eine Pulslichtquelle ist, so sind die Pulse in den beiden abgespaltenen Lichtanteilen zwangsläufig zueinender synchronisiert, was eine für die STED-Mikroskopie sehr wichtige Eigenschaft ist.

Vorzugsweise durchläuft das Licht der Primärlichtquelle das mikrostrukturierte optische Element und/oder das weitere mikrostrukturierte optische Element nur ein mal. Es ist jedoch auch ein wiederholtes Durchlaufen möglich.

Vorzugsweise beinhaltet das mikrostrukturierte optische Element und/oder das weitere mikrostrukturierte optische Element Photonic-Band-Gap-Material. Vorzugsweise ist das mikrostrukturierte optische Element und/oder das weitere mikrostrukturierte optische Element als Lichtleitfaser ausgestaltet (Photonic-Crystal-Faser (PCS); Holey fiber, usw).

In einer anderen Variante weist das als Lichtleitfaser ausgestaltete mikrostrukturierte optische Element eine Verjüngung (Tapered fiber) auf.

Das mikrostrukturierte optische Element und/oder das weitere mikrostrukturierte optische Element ist in einer bevorzugten Ausgestaltung des Scanmikroskops aus einer Vielzahl von mikrooptischen Strukturelementen aufgebaut, die zumindest zwei unterschiedliche optische Dichten aufweisen. Ganz besonders bevorzugt ist eine Ausgestaltung, bei der das optische Element einen ersten Bereich und einen zweiten Bereich beinhaltet, wobei der erste Bereich eine homogene Struktur aufweist und in dem zweiten Bereich eine mikroskopische Struktur aus mikrooptischen Strukturelementen gebildet ist. Von Vorteil ist es außerdem, wenn der zweite Bereich den ersten Bereich umschließt. Die mikrooptischen Strukturelemente sind vorzugsweise Kanülen, Stege, Waben, Röhren oder Hohlräume.

Das mikrostrukturierte optische Element und/oder das weitere mikrostrukturierte optische Element besteht in einer besonderen Variante aus nebeneinander angeordnetem Glas- oder Kunststoffmaterial und Hohlräumen. Besonders zu bevorzugen ist die Ausführungsvariante, bei der das mikrostrukturierte optische Element und/oder das weitere mikrostrukturierte optische Element aus Photonic-Band-Gap-Material besteht und als Lichtleitfaser ausgestaltet ist. Vorzugsweise ist zwischen dem Laser und der Lichtleitfaser eine optische Diode vorgesehen, die Rückreflexionen des Lichtstrahles, die von, den Enden der Lichtleitfaser herrühren, unterdrückt.

Eine ganz besonders bevorzugte und einfach zu realisierende Ausführungsvariante beinhaltet als mikrostrukturiertes optisches Element und/oder als weiteres mikrostrukturiertes optisches Element eine herkömmliche Lichtleitfaser mit einem Faserkerndurchmesser von ca. 9 µm, die zumindest entlang eines Teilstücks eine Verjüngung aufweist. Lichtleitfasern dieser Art sind als sog. "tapered fibers" bekannt. Vorzugsweise ist die Lichtleitfaser insgesamt 1 m lang und weist eine Verjüngung auf einer Länge von 30 mm bis 90 mm auf. Der Durchmesser der gesamten Faser beträgt in einer bevorzugten Ausgestaltung im Bereich der Verjüngung ca. 2 µm.

Eine weitere bevorzugte Ausführungsvariante beinhaltet ein mikrostrukturiertes optisches Element und ein weiteres mikrostrukturiertes optisches Element, bei denen die Strukturelemente kontinuierlich ineinander übergehen. In einer ganz besonders bevorzugten Variante sind ein mikrostrukturiertes optisches Element und ein weiteres mikrostrukturiertes optisches Element als Lichtleitfasern mit kontinuierlichem Übergang ausgebildet.

Die erfindungsgemäße Lichtquelle ist beispielsweise auch in einem Flußzytometer oder einem Endoskop oder einem Chromatographen oder einer Lithographievorrichtung verwendbar.

In der Zeichnung ist der Erfindungsgegenstand schematisch dargestellt und wird anhand der Figuren nachfolgend beschrieben. Dabei zeigen:
- Fig. 1: eine erfindungsgemäße Lichtquelle,
- Fig. 2: eine weitere erfindungsgemäße Lichtquelle und
- Fig. 3: ein erfindungsgemäßes konfokales Rastermikroskop.

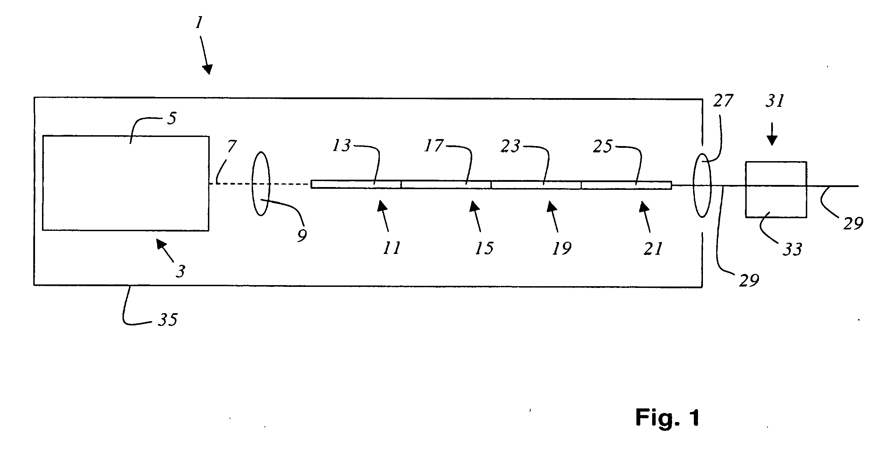

Fig. 1 zeigt eine erfindungsgemäße Lichtquelle 1 mit einer Primärlichtquelle 3, die als gepulster Titan-Saphir-Laser 5 ausgestaltet ist. Das Licht 7 der Primärlichtquelle wird mit Hilfe der Einkoppeloptik 9 in ein mikrostrukturiertes optisches Element 11, das als Photonic-Crystal-Faser 13 ausgebildet ist, eingekoppelt. Unmittelbar an die Photonic-Crystal-Faser 13 ist ein weiteres mikrostrukturiertes optisches Element 15, das als weitere Photonic-Crystal-Faser 17 ausgebildet ist, angespleißt. Analog folgen ein drittes und ein viertes mikrostrukturiertes optisches Element 19, 21, die als dritte und vierte Photonic-Crystal-Faser 23, 25 angespleißt sind. Das aus der vierten Photonic-Crystal-Faser 25 austretende spektrale verbreiterte Licht wird mit Hilfe der Optik 27 zu einem Beleuchtungslichtstrahl 29 geformt. Der Beleuchtungslichtstrahl 29 durchläuft anschließend ein Mittel 31 zum Selektieren von Lichtanteilen zumindest einer Wellenlänge und/oder zumindest eines Wellenlängenbereichs, das als AOTF 33 ausgebildet ist. Der aus dem AOTF 33 austretende Beleuchtungslichtstrahl 29 beinhaltet nur noch Lichtanteile der ausgewählten Wellenlänge bzw. der ausgewählten Wellenlängenbereiche, während die übrigen Lichtanteile von dem AOTF in eine nicht gezeigte Strahlfalle gelenkt werden. Zum Schutz vor äußeren Beeinflussungen, insbesondere zum Schutz vor Verschmutzung, weist die Lichtquelle ein Gehäuse 35 auf.

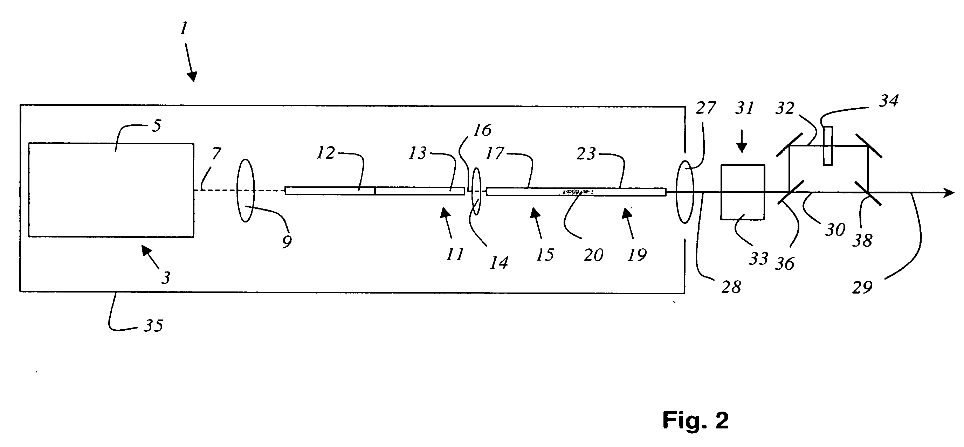

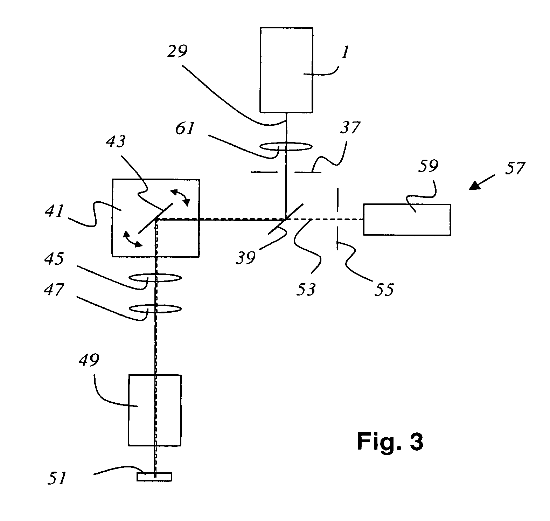

Eine weitere erfindungsgemäße Lichtquelle ist in Fig. 2 dargestellt. Das Licht 7 der Primärlichtquelle 3 wird zunächst mit Hilfe der Einkoppeloptik 9 in eine konventionelle Lichtleitfaser 12 eingekoppelt. Die konventionelle Lichtleitfaser 12 ist mit einem mikrostrukturiertem optischen Element 11, das als Photonic-Crystal-Faser 13 ausgeführt ist, verspleißt. In der Photonic-Crystal-Faser 13 wird das Licht 7 spektral verbreitert und aus der Faser ausgekoppelt. Das spektral verbreiterte Licht 16 wird anschließend mit Hilfe einer Linsenanordnung 14 in ein weiteres mikrostrukturiertes optisches Element 15, das als weitere Photonic-Crystal-Faser 17 ausgestattet ist, eingekoppelt. Die Kopplung zweier Lichtleitfasern mit einer Linsenanordnung ist in der Faseroptik ein Standard und kann konfektioniert werden. Im Anschluss an die weitere Photonic-Crystal-Faser 17 befindet sich ein drittes mikrostrukturiertes Element 19, bestehend aus einer dritten Photonic-Crystal-Faser 23. Im Übergangsbereich 20, der mit einem graduellen Grauübergang dargestellt ist, gehen die Strukturelemente kontinuierlich ineinander über. Der Lichtstrahl weist nach Durchlaufen aller optischen Elemente ein Spektrum auf, in dem in bestimmte Spektralbereiche besonders viel Licht konvertiert worden ist, im Vergleich zu allen anderen Spektralbereichen. Dieser spektral geformte Lichtstrahl 28 durchläuft anschließend ein Mittel 31 zum Selektieren von Lichtanteilen zumindest einer Wellenlänge und/oder zumindest eines Wellenlängenbereichs, das als AOTF 33 ausgebildet ist. Anschließend wird der spektral geformte Lichtstrahl 28 mit einem Strahlteiler 36 in einen Anregungslichtstrahl 30 und einen Stimulationslichtstrahl 32 aufgeteilt. Der Stimulationslichtstrahl 32 durchläuft eine Phasenverzögerungsplatte 34, wie sie in der STED-Mikroskopie Verwendung findet. Dem Fachmann ist diese Vorgehensweise hinlänglich bekannt. Über einen Strahlvereiniger 38 werden beide Lichtstrahlen wieder miteinander vereint. Dieser Lichtstrahl kann anschließend als Beleuchtungslichtstrahl 29 in ein erfindungsgemäßes Rastermikroskop, wie in Fig. 3 beschrieben ist, eingekoppelt und zur STED-Mikroskopie verwendet werden.

Fig. 3 zeigt ein erfindungsgemäßes Rastermikroskop, das als konfokales Rastermikroskop ausgebildet ist. Der von einer erfindungsgemäßen Lichtquelle 1 mit den in dieser Figur nicht gezeigten mikrostrukturierten optischen Elementen ausgehende Beleuchtungslichtstrahl 29 wird von der Linse 61 auf die Beleuchtungslochblende 37 fokussiert und gelangt anschließend zu dem Hauptstrahlteiler 39, der den Beleuchtungslichtstrahl 29 zu der Strahlablenkeinrichtung 41, die einen kardanisch aufgehängten Scanspiegel 43 beinhaltet, lenkt. Die Strahlablenkeinrichtung 41 führt den Beleuchtungslichtstrahl 29 durch die Scanlinse 45 und die Tubuslinse 47 sowie durch das Objektiv 49 hindurch über bzw. durch die Probe 51. Das von der Probe ausgehende Detektionslicht 53, das in der Figur gestrichelt dargestellt ist, gelangt auf dem umgekehrten Lichtweg, nämlich durch das Objektiv 49, die Tubuslinse 47 und durch die Scanlinse 45 zurück zur Strahlablenkeinrichtung 41 und zum Hauptstrahlteiler 39, passiert diesen und gelangt nach Durchlaufen der Detektionslochblende 55 zum Detektor 57, der als Multibanddetektor 59 ausgeführt ist. Im Multibanddetektor 59 wird in verschiedenen spektralen Detektionskanälen das Detektionslicht detektiert und zur Leistung proportionale elektrische Signale erzeugt, die an ein nicht gezeigtes Verarbeitungssystem zur Darstellung eines Abbildes der Probe 51 weitergegeben werden.

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

### Bezugszeichenliste:

- 1: Lichtquelle
- 3: Primärlichtquelle
- 5: Titan-Saphir-Laser
- 7: Licht
- 9: Einkoppeloptik
- 11: mikrostrukturiertes optisches Element
- 12: konventionelle Lichtleitfaser
- 13: Photonic-Crystal-Faser
- 14: Linsenanordnung
- 15: weiteres mikrostrukturiertes optisches Element
- 16: spektral verbreitertes Licht
- 17: weitere Photonic-Crystal-Faser
- 19: drittes mikrostrukturiertes optisches Element
- 20: Übergangsbereich
- 21: viertes mikrostrukturiertes optisches Element
- 23: dritte Photonic-Crystal-Faser
- 25: vierte Photonic-Crystal-Faser
- 27: Optik
- 28: spektral geformter Lichtstrahl
- 29: Beleuchtungslichtstrahl
- 30: Anregungslichtstrahl
- 31: Mittel zum Selektieren von Lichtanteilen
- 32: Stimulationslichtstrahl
- 33: AOTF
- 34: Phäsenverzögerungsplatte
- 35: Gehäuse
- 36: Strahlteiler
- 37: Beleuchtungslochblende
- 38: Strahlvereiniger
- 39: Hauptstrahlteiler
- 41: Strahlablenkeinrichtung
- 43: Scanspiegel
- 45: Scanlinse
- 47: Tubuslinse
- 49: Objektiv
- 51: Probe
- 53: Detektionslicht
- 55: Detektionslochblende
- 57: Detektor
- 59: Multibanddetektor
- 61: Linse

## Patentansprüche

1. Mikroskop zur Untersuchung einer Probe (51) mit einer Lichtquelle (1) mit einem mikrostrukturierten optischen Element (11),
das das Licht einer Primärlichtquelle (3) empfängt und spektral verbreitert,
wobei das mikrostrukturierte Element (11) eine Photonic-Crystal-Faser ist oder Photonic-Band-Gap-Material beinhaltet oder als Lichtleitfaser ausgestaltet ist, die eine Verjüngung aufweist,
wobei ein Mittel (33) zum Selektieren von Lichtanteilen zumindest einer Wellenlänge und/oder zumindest eines Wellenlängenbereichs vorgesehen sind,
und wobei das von dem Mittel (33) zum Selektieren abgegebene Beleuchtungslicht (29) der Probe (51) für mikroskopische Untersuchungen zugeführt ist,
**dadurch gekennzeichnet, dass** das spektral verbreiterte Licht zumindest ein weiteres mikrostrukturiertes optisches Element (15) durchläuft,
wobei das mikrostrukturierte optische Element (11) und das weitere mikrostrukturierte Element (15) miteinander verspleißt sind oder das Licht, welches aus dem mikrostrukturierten Element (11) austritt, mit einer Linsenanordnung (14) in das weitere mikrostrukturierte Element (15) einkoppelbar ist,
wobei das weitere mikrostrukturierte optische Element (15) eine Photonic-Crystal-Faser ist, Photonic-Band-Gap-Material beinhaltet oder als Lichtleitfaser ausgestaltet ist, die eine Verjüngung aufweist,
wobei durch die geeignete Auswahl der Parameter des mikrostrukturierten optischen Elements (11) und des weiteren mikrostrukturierten optischen Elements (15) die Leistung des von der Lichtquelle (1) emittierten Lichts in den spektralen Unterbereichen, die für eine Anwendung von besonderer Bedeutung sind, erhöht sind, und
wobei das von der Lichtquelle (1) emittierte Licht eine spektrale Breite hat, die über die spektrale Breite, die jedes einzelne mikrostrukturierte Element (11, 15) erzeugen würde, hinausgeht.

2. Mikroskop nach Anspruch 1, **dadurch gekennzeichnet, dass** das mikrostrukturierte optische Element (11) und das weitere mikrostrukturierte optische Element (15) kontinuierlich ineinander übergehen.

3. Mikroskop nach einem der Ansprüche 1 und 2, **dadurch gekennzeichnet, dass** die Primärlichtquelle (3) einen Pulslaser umfasst.

4. Mikroskop nach einem der Ansprüche 1 bis 3, **dadurch gekennzeichnet, dass** das Licht der Primärquelle (3) das mikrostrukturierte optische Element und/oder das weitere mikrostrukturierte optische Element (15) wiederholt durchläuft.

5. Mikroskop nach einem der vorhergehenden Ansprüche, **dadurch gekennzeichnet, dass** als Mittel (33) zum Selektieren ein akusto-optisches oder elektro-optisches Bauteil vorgesehen ist.

6. Mikroskop nach Anspruch 5, **dadurch gekennzeichnet, dass** das Mittel zum Selektieren als AOTF (33) oder als AOBS ausgeführt ist.

7. Mikroskop nach einem der Ansprüche 1 bis 6, **dadurch gekennzeichnet, dass** es als Rastermikroskop ausgebildet ist.

8. Mikroskop nach Anspruch 7, **dadurch gekennzeichnet, dass** das Mikroskop ein konfokales Rastermikroskop und/oder ein doppelkonfokales Rastermikroskop und/oder ein STED-Rastermikroskop und/oder ein STED-4Pi-Rastermikroskop und/oder ein CARS-Rastermikroskop ist.

9. Verfahren zur Erzeugung von Beleuchtungslicht in einem Mikroskop,
Erzeugen von spektral verbreitertem Licht mittels einer Lichtquelle mit einem mikrostrukturierten optischen Element,
das das Licht einer Primärlichtquelle (3) empfängt und spektral verbreitert,
wobei das mikrostrukturierte optische Element (11) eine Photonic-Crystal-Faser ist oder Photonik-Band-Gap-Material beinhaltet oder als Lichtleitfaser ausgestaltet ist, die eine Verjüngung aufweist,
wobei ein Mittel (33) zum Selektieren von Lichtanteilen zumindest einer Wellenlänge und/oder zumindest eines Wellenlängenbereichs vorgesehen wird,
wobei das vom Mittel (33) zum Selektieren abgegebene Beleuchtungslicht (29) einer Probe (51) für mikroskopische Untersuchungen zugeführt wird,
Auswählen mindestens einer Beleuchtungslichtwellenlänge und/oder zumindest eines Beleuchtungslichtwellenlängenbereichs und
Abspalten des Beleuchtungslichtes der zumindest einen Beleuchtungslichtwellenlänge und/oder des zumindest einen Beleuchtungslichtwellenlängenbereichs aus dem spektral verbreiterten Licht,
**dadurch gekennzeichnet, dass** das spektral verbreiterte Licht zumindest ein weiteres mikrostrukturiertes optisches Element (15) durchläuft,
wobei das mikrostrukturierte optische Element (11) und das weitere mikrostrukturierte Element (15) miteinander verspleißt sind oder das Licht, welches aus dem mikrostrukturierten Element (11) austritt, mit einer Linsenanordnung (14) in das weitere mikrostrukturierte Element (15) einkoppelbar ist,
wobei das weitere mikrostrukturierte optische Element (15) eine Photonic-Crystal-Faser ist oder Photonic-Band-Gap-Material beinhaltet oder als Lichtleitfaser ausgebildet ist, die eine Verjüngung aufweist, und
wobei durch geeignete Auswahl der Parameter des mikrostrukturierten Elements (11) und des weiteren mikrostrukturierten Elements (15) die Leistung des von der Lichtquelle (1) emittierten Lichts in den spektralen Unterbereichen, die für eine Anwendung von besonderer Bedeutung sind, erhöht werden, und
wobei das von der Lichtquelle (1) emittierte Licht eine spektrale Breite hat, die über die spektrale Breite, die jedes einzelne mikrostrukturierte Element (11, 15) erzeugen würde, hinausgeht.

10. Verfahren nach Anspruch 9, **dadurch gekennzeichnet, dass** das Beleuchtungslicht eine Probe (51) optisch anregt.

11. Verfahren nach einem der Ansprüche 9 oder 10, **gekennzeichnet durch** den weiteren Schritt:
Auswählen zumindest einer weiteren Beleuchtungslichtwellenlänge und/oder zumindest eines weiteren Beleuchtungslichtwellenlängenbereichs und
Abspalten von weiterem Beleuchtungslicht der zumindest einen weiteren Beleuchtungslichtwellenlänge und/oder des zumindest einen weiteren Beleuchtungslichtwellenlängenbereichs aus dem spektral verbreiterten Licht.

12. Verfahren nach Anspruch 11, **dadurch gekennzeichnet, dass** das weitere Beleuchtungslicht eine stimulierte Emission bewirkt.

13. Verwendung des Verfahrens nach einem der Ansprüche 9 bis 12 in der STED-Mikroskopie.

14. Verwendung des Verfahrens nach einem der Ansprüche 9 bis 13 zur Durchführung von Pump-Probe-Experimenten.

## Claims

1. A microscope for examining a sample (51) by means of a light source (1) with a microstructured optical element (11),
that receives light of a primary light source (3) and spectrally broadens the light,
wherein the microstructured element (11) is a photonic crystal fiber or comprises a photonic band gap material or is formed as a tapered optical fibre,
wherein a means (33) for selecting light components of at least one wavelength and/or at least one wavelength region is provided,
and wherein the illumination light (29) emitted by the selecting means (33) is supplied to the sample (51) for microscopic examinations,
**characterized in that** the spectrally broadened light passes at least one further microstructured optical element (15),
wherein the microstructured optical element (11) and the further microstructured element (15) are spliced with each other or the light emitting from the microstructured element (11) can be coupled into the further microstructured element (15) by a lens system (14),
wherein the further microstructured optical element (15) is a photonic crystal fiber, comprises photonic band gap material, or is formed as a tapered optical fiber,
wherein through appropriate selection of the parameters of the microstructured optical element (11) and the further microstructured optical element (15) the power of the light emitted by the light source (1) in the spectral sub-regions, that are especially important for an application, is increased, and
wherein the light emitted from the light source (1) has a spectral width that exceeds the spectral width each individual microstructured element (11, 15) would produce.

2. Microscope according to claim 1, **characterized in that** the microstructured optical element (11) and the further microstructured optical element (15) continuously merge into one another.

3. Microscope according to one of claims 1 or 2, **characterized in that** the primary light source (3) comprises a pulsed laser.

4. Microscope according to one of claims 1 to 3, **characterized in that** the light of the primary source (3) repeatedly passes the microstructured element and/or the further microstructured optical element (15).

5. Microscope according to one of the preceding claims, **characterized in that** as selecting means (33) an acousto-optical or electro-optical component is provided.

6. Microscope according to claim 5, **characterized in that** the selecting means is designed as AOTF (33) or as AOBS.

7. Microscope according to one of claims 1 to 6, **characterized in that** it is designed as scanning microscope.

8. Microscope according to claim 7, **characterized in that** the microscope is a confocal scanning microscope and/or a double confocal scanning microscope and/or a STED scanning microscope and/or a STED-4Pi-scanning microscope and/or a CARS scanning microscope.

9. Mehod for generating illumination light in a microscope,
generating spectrally broadened light by means of a light source with a microstructured optical element,
that receives the light of a primary light source (3) and spectrally broadens the light,
wherein the microstructured optical element (11) comprises a photonic crystal fibre or photonic band gap material or is designed as tapered optical fiber,
wherein a means (33) for selecting light components of at least one wavelength and/or at least one wavelength region is provided,
wherein the illumination light (29) emitted from the selecting means (33) is supplied to a sample (51) for microscopic examinations, selecting of at least one illumination light wavelength and/or at least one illumination light wavelength region and
splitting the illumination light of at least one illumination light wavelength and/or at least one illumination light wavelength region from the spectrally broadened light,
**characterized in that** the spectrally broadened light passes at least one further microstrutured optical element (15),
wherein the microstructured optical element (11) and the further microstructured element (15) are spliced with one another, or the light emitting from the microstructured element (11) can be coupled into the further microstructured element (15) by a lens system (14),
wherein the further microstructured optical element (15) is a photonic crystal fiber, or includes a photonic band gap material, or is formed as tapered optical fibre, and
wherein through appropriate selection of the parameters of the microstructured element (11) and the further microstructured element (15) the power of the light emitted from the light source (1) in the spectral sub-regions, that are especially important for an application, is increased, and
wherein the light emitted from the light source (1) has a spectral width that exceeds the spectral width each individual microstructured element (11, 15) would produce.

10. Method according to claim 9, **characterized in that** the illumination light optically stimulates a sample (51).

11. Method according to one of claims 9 or 10, **characterized in** the further step:
selecting at least one further illumination light wavelength and/or at least one further illumination light wavelength region and
splitting further illumination light of at least one further illumination light wavelength and/or of at least one further illumination light wavelength region from the spectrally broadened light.

12. Method according to claim 11, **characterized in that** the further illumination light causes a stimulated emission.

13. Use of the method according to one of claims 9 to 12 in the STED-microscopy.

14. Use of the method according to one of claims 9 to 13 for performing pump-probe experiments.

## Revendications

1. Microscope destiné à analyser un échantillon (51) au moyen d'une source lumineuse comportant un élément optique microstructuré (11)
qui reçoit la lumière d'une source lumineuse primaire (3) et la soumet à un étalement spectral
l'élément microstructuré (11) étant une fibre à cristaux photoniques ou contenant un matériau photonique à bandes interdites ou étant conformé en fibre optique qui comporte un amincissement,
un moyen de sélection (33) étant prévu pour sélectionner des fractions de lumière d'au moins une longueur d'onde et/ou d'au moins une gamme de longueurs d'onde,
et la lumière d'éclairement (29) délivré par le moyen de sélection (33) étant amenée à l'échantillon (51) pour effectuer des analyses microscopiques,
**caractérisé en ce que** la lumière soumise à un étalement spectral traverse au moins un autre élément optique microstructuré (15),
l'élément optique microstructuré (11) et l'autre élément microstructuré (15) étant épissés l'un à l'autre ou la lumière, qui sort de l'élément microstructuré (11), pouvant être injectée par le biais d'un agencement de lentilles (14) dans l'autre élément microstructuré (15),
l'autre élément optique microstructuré (15) étant une fibre à cristaux photoniques, contenant un matériau photonique à bandes interdites ou étant conformé en fibre optique qui présente un amincissement,
le rendement de la lumière émise par la source lumineuse (1) et située dans les sous-gammes spectrales, qui sont d'une importance particulière pour l'utilisation, est majoré par le choix approprié des paramètres de l'élément optique microstructuré (11) et de l'autre élément optique microstructuré (15), et
la lumière émise par la source lumineuse (1) ayant une largeur spectrale qui va au-delà de la largeur spectrale qui a été générée par chaque élément microstructuré individuel (11, 15).

2. Microscope selon la revendication 1, **caractérisé en ce que** l'élément optique microstructuré (11) et l'autre élément optique microstructuré (15) se fondent de façon continue.

3. Microscope selon l'une des revendications 1 et 2, **caractérisé en ce que** la source lumineuse primaire (3) comporte un laser pulsé.

4. Microscope selon l'une des revendications 1 à 3, **caractérisé en ce que** la lumière de la source primaire (3) traverse de façon répétée l'élément optique microstructuré et/ou l'autre élément optique microstructuré (15).

5. Microscope selon l'une des revendications précédentes, **caractérisé en ce qu'**il est prévu comme moyen de sélection (33) un composant acoustico-optique ou électro-optique.

6. Microscope selon la revendication 5, **caractérisé en ce que** le moyen de sélection est réalisé par une technologie AOTF (33) ou par une technologie AOBS.

7. Microscope selon l'une des revendications 1 à 6, **caractérisé en ce qu'**il est conformé en microscope à balayage.

8. Microscope selon la revendication 7, **caractérisé en ce que** le microscope est un microscope à balayage confocal et/ou un microscope à balayage confocal double et/ou un microscope à balayage STED-4PI et/ou un microscope à balayage CARS.

9. Procédé de génération de lumière d'éclairement dans un microscope, ledit procédé comportant
la génération d'une lumière soumise à un étalement spectral au moyen d'une source lumineuse comportant un élément optique microstructuré,
qui reçoit la lumière d'une source lumineuse primaire (3) et la soumet un étalement spectral,
l'élément microstructuré (11) étant une fibre à cristaux photoniques ou contenant un matériau photonique à bandes interdites ou étant conformé en fibre optique qui comporte un amincissement,
un moyen de sélection (33) étant prévu pour sélectionner des fractions de lumière d'au moins une longueur d'onde et/ou d'au moins une gamme de longueurs d'onde,
et la lumière d'éclairement (29) délivré par le moyen de sélection (33) étant amenée à un échantillon (51) pour effectuer des analyses microscopiques,
la sélection d'au moins une longueur d'onde de lumière d'éclairement et/ou d'au moins une gamme de longueurs d'one de lumière d'éclairement et
la séparation de la lumière d'éclairement de l'au moins une longueur d'onde de lumière d'éclairement et/ou de l'au moins une gamme de longueurs d'onde de lumière d'éclairement de la lumière soumise à un étalement spectral,
**caractérisé en ce que** la lumière soumise à un étalement spectral traverse au moins un autre élément optique microstructuré (15),
l'élément optique microstructuré (11) et l'autre élément microstructuré (15) étant épissés l'un à l'autre ou la lumière, qui sort de l'élément microstructuré (11), pouvant être injectée par le biais d'un agencement de lentilles (14) dans l'autre élément microstructuré (15),
l'autre élément optique microstructuré (15) étant une fibre à cristaux photoniques, contenant un matériau photonique à bandes interdites ou étant conformé en fibre optique qui présente un amincissement,
le rendement de la lumière émise par la source lumineuse (1) et située dans les sous-gammes spectrales, qui sont d'une importance particulière pour l'utilisation, est majoré par le choix approprié des paramètres de l'élément optique microstructuré (11) et de l'autre élément optique microstructuré (15), et
la lumière émise par la source lumineuse (1) ayant une largeur spectrale qui va au-delà de la largeur spectrale qui a été générée par chaque élément microstructuré individuel (11, 15).

10. Procédé selon la revendication 9, **caractérisé en ce que** la lumière d'éclairement excite optiquement un échantillon (51).

11. Procédé selon l'une des revendications 9 ou 10, **caractérisé par** l'étape supplémentaire
de sélection d'au moins une longueur d'onde de lumière d'éclairement et/ou d'au moins une gamme de longueurs d'onde de lumière d'éclairement et
de séparation d'une autre lumière d'éclairement de l'au moins une autre longueur d'onde de lumière d'éclairement et/ou de l'au moins une autre gamme de longueurs d'onde de lumière d'éclairement de la lumière soumise à un étalement spectral,

12. Procédé selon la revendication 11, **caractérisé en ce que** l'autre lumière d'éclairement provoque une émission stimulée.

13. Utilisation du procédé selon l'une des revendications 9 à 12 en microscopie STED.

14. Utilisation du procédé selon l'une des revendications 9 à 13 pour effectuer des expériences sur échantillons par pompe.
